# EUROPEAN PATENT APPLICATION

(11) **EP 1 728 841 A1**
(43) Date of publication of application: **06.12.2006**
(21) Application number: 05012054.2
(22) Date of filing: 03.06.2005
(51) Int. Cl.: C09J 7/02

(54) **Screen protective paster and manufacturing method thereof**

(71) Applicant: Uniasia Channel Service Corp., Jongshan District Taipei City 104 (TW)
(72) Inventor: Hu, An-Pang, Bade City Taoyuan County 334 (TW)
(74) Representative: Reinhardt, Markus

(57) **Abstract**

This invention is related to a screen protective paster, which includes a screen protective film and a pre-protective film. There is at least a groove on the pre-protective film. User can tear a part of the pre-protective film off sequentially by the groove when attaching the screen protective film. That will avoid the wrinkles and the bubbles occurred, especially, attaches the bigger size screen protective film to a screen.

## Description

### BACKGROUND OF THE INVENTION

The present invention relates in general to a screen protective paster and a manufacturing method thereof, and more particular, to a screen protective paster, which is easier used by a user, and avoid the wrinkles and the bubbles occurred, and the manufacturing method thereof.

Due to the technology development, the present electronic device always has a screen thereon to display for something, such as operation conditions. It will be helpful for a user to operate. The screen is also a liquid crystal type screen because of its advantages of thinness, convenience and reasonable price and so on. But the liquid crystal type screen is too weak to prevent from scrapping. For this reason, a screen protective paster is used to attach on the screen in the art for improving the strength of anti-scrape and capability for preventing from shock.

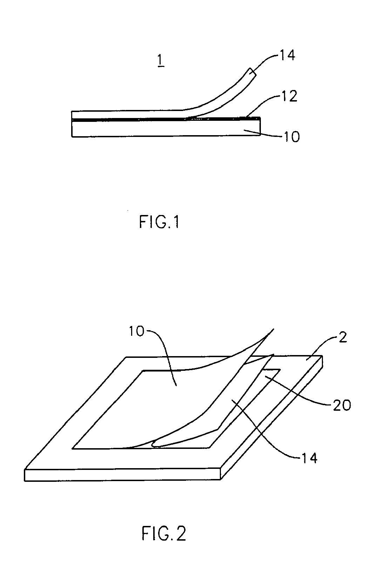

A related screen protective paster has been disclosed as refer to Fig.1. This figure shows a cross-section of a screen protective paster of the related invention before attaching on a screen. In general, a screen protective paster 1 includes a screen protective film 10, a pre-protective film 14, and an adhesive layer 12. The screen protective film 10 is also made by plastic material and is flexible and transparent. The adhesive layer 12 is above the screen protective film 10, which is sticky because of stickiness of the adhesive layer 12. The pre-protective film 14 is covered on the adhesive layer 12 before screen protective film 10 is attached on a screen for protecting the screen protective film 10. If user want to use the screen protective paster 1, he can tear the pre-protective film 14 first to expose the adhesive layer 12, and attach the screen protective film 10 on a screen.

A usage method of screen protective paster 1 can refer figure 2. A user can tear a corner of the pre-protective film 14 off at first, and let the adhesive layer 12 face to the screen 20 of the electronic device 2 and align a side of the pre-protective film 14 to a side of the screen 20 at the same time, and than tear the pre-protective film 14 off and wipe the screen protective film 10 respect to what is torn off synchronously. The screen protective film 10 will be attached on the screen 20 of the electronic device 2 by this way. The screen 20 is more anti-scraped and anti-shocked therefore.

The above-mentioned method can be easier to be applied to a small size screen, such as 1.5 inches to 7 inches screen, but can't be convenient to be applied to a large size screen, such as larger than 7 inches screen. Basically, the larger screen will need a larger screen protective paster attached thereon. User has to tear larger pre-protective film off and attach screen protective film on the screen. There are wrinkles and the bubbles occurred between the screen protective film and the screen. The screen protective paster will look worse and affect the transparency.

### BRIEF SUMMARY OF THE INVENTION

The present invention provides a screen protective paster and a manufacturing method thereof to avoid wrinkles and the bubbles occurred if user attach a larger enough screen protective paster to a screen.

For this reason, the present invention provides a screen protective paster includes a screen protective film, having an adhesive layer disposed thereon; and a pre-protective film, disposed on the adhesive layer, wherein the pre-protective film has a groove thereon. User can tear a part of the pre-protective film off and attach the relative part of screen protective film according the groove, and than tear the other part of the pre-protective film off to finish the screen protective film attached to a screen. Due to tear the pre-protective film off one by one, user can concentrate to attach a smaller part of the screen protective film attachment. The disadvantages will be overcome therefore.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF THE DRAWINGS

These as well as other features of the present invention will become more apparent upon reference to the drawings therein:
Figure 1 is a schematic view, which shows a cross-section of a screen protective paster of the related invention.
Figure 2 is a schematic view, which shows a solid view of a screen protective paster of the related invention when attaching on a screen.
Figure 3 is a schematic view, which shows a cross-section of a screen protective paster of the present invention.
Figure 4 is a schematic view, which shows a vertical view of a screen protective paster of the present invention.
Figure 5 is a schematic view, which shows a solid view of a screen protective paster of the present invention when one part of the screen protective paster attaching on a screen.
Figure 6 is a schematic view, which shows a solid view of a screen protective paster of the present invention when the other part of the screen protective paster attaching on a screen.
Figure 7 is a schematic view, which shows a detail cross-section of a groove of the screen protective paster of an embodiment of the present invention.
Figure 8 is a schematic view, which shows a detail cross-section of a groove of the screen protective paster of another embodiment of the present invention.
Figure 9 is a schematic view, which shows a vertical view of a pre-protective film of an embodiment of the present invention.
Figure 10 is a schematic view, which shows a vertical view of a pre-protective film of another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers are used in the drawings and the description to refer to the same or like parts.

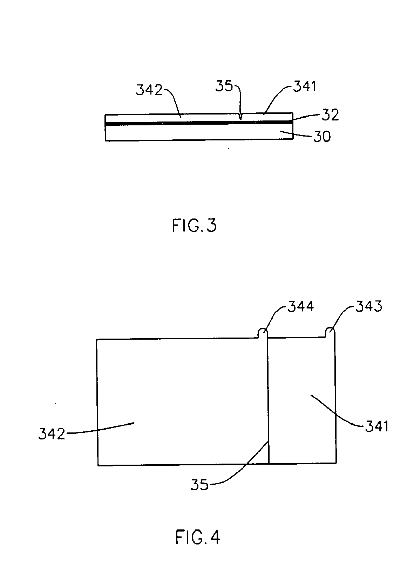

Please refer to figure 3. This figure shows a cross-section of a screen protective paster of the present invention when it is not used. The screen protective paster 3 includes a screen protective film 30, an adhesive layer 32, a first pre-protective film 341, and a second pre-protective film 342. The screen protective film 30 is also made by plastic material like the related art. Hence, the screen protective film 30 is flexible and transparent therefore. The adhesive layer 32 is disposed on a side of the screen protective film 30. The screen protective film 30 will be sticky for being attached on a screen by means of the adhesive layer 32. The first pre-protective film 341 and the second pre-protective film 342 are disposed on the adhesive layer 32. A groove 35 is formed between them. Furthermore, please refer to figure 4, there is a first protruding tag 343 connected to the first pre-protective film 341 for easier to tear the first pre-protective film 341 off. The first protruding tag 343 can be made by the same material to the first pre-protective film 341, even be made at the same time with the first pre-protective film 341 in a shape, but not necessary. The most important feature is the first protruding tag 343 is not adhesive; user can be easier to handle it and tear the first pre-protective film 341 off. The second protruding tag 344 is connected to the second pre-protective film 342 similar to the first protruding tag 343. The detail description has been omitted therefore.

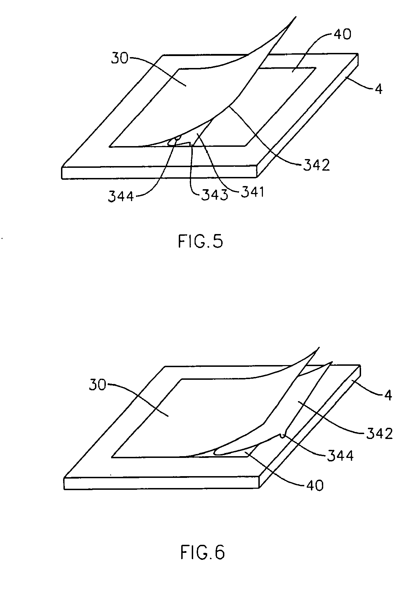

Please refer to figure 5 and 6 simultaneously for understanding the usage method of the screen protective paster of the present invention. According to the aforementioned structure of the screen protective paste 3, a user can hold the first protruding tag 343 and than tear a part of the first pre-protective film 341 off at first. The adhesive layer 32 is exposed therefore. The screen protective film 30 is aligned and attached by its one side to one side of the screen 40 of the electronic device 4. And then user can tear the first pre-protective film 341 off gradually and wipe the screen protective film 30 respect to what is torn off synchronously. This part of the screen protective film 30 will be attached on the screen 40. To continue the method, please refer to figure 6, user can hold the second protruding tag 344 and tear a part of the second pre-protective film 342 off, and than tear the second pre-protective film 342 off gradually and wipe the screen protective film 30 respect to what is torn off synchronously. Hence, the screen protective film 30 is totally attached on the screen 40 of the electronic device 4.

The usage method of the screen protective paster of the present invention is attaching the first pre-protective film 341 and the second pre-protective film 342 on the screen 40 in an order. The disadvantages of the wrinkles and the bubbles occurred during a larger screen protective film be attached on a screen will be ignored. Furthermore, pre-protective film of this invention can be divided not only two but more. The similar effect will be obtained by the same way.

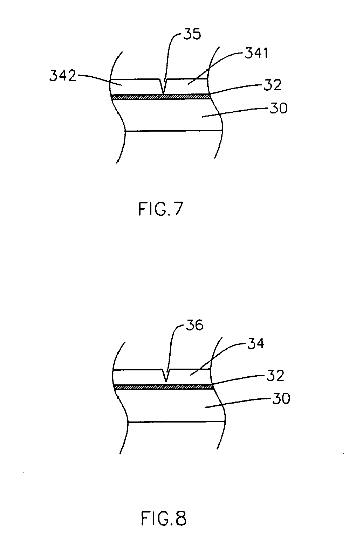

According to the above mentioned structure, please refer to figure 7, the groove 35 can divide a pre-protective film into the first pre-protective film 341 and the second pre-protective film 342. It is more convenient for user to tear the first pre-protective film 341 and the second pre-protective film 342 off sequentially. Thus, the screen protective film 30 can be attached on a screen without any disadvantages like related art. Besides, please refer to figure 8, the groove 35 can has a specific depth, which is smaller than the thickness of the pre-protective film 34. The pre-protective film 34 is not necessary to be cut into two pieces. User can be still easier to tear one part of the pre-protective film 34 off, and the other part of the pre-protective film 34 can be retained on the adhesive layer 32, because of the pre-protective film 34 is thin enough. User can also tear the other part of the pre-protective film 34 off at least. The same effect will be obtained by the same way.

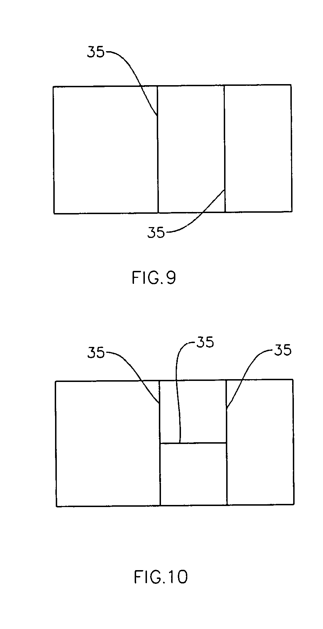

In addition, please refer to figure 9, the pre-protective film 34 can be divided into not only two pieces but more, such as three pieces, by grooves 35. For example, user can tear the pre-protective films off sequentially, and attach the screen protective film on the screen gradually. For this reason, user can be easier to attach the screen protective film on the screen because that user deal with a smaller part of the screen protective film once, the wrinkles and the bubbles can be ignored therefore. By same ways, please refer to figure 10, the pre-protective film 34 can be divided into fore pieces like illustrated. The effect will be similar.

The present invention provides a manufacturing method for making the above mentioned screen protective paster. The first step of the method is providing a screen protective film, which is also made by plastic material, and arranging an adhesive layer on the surface of the screen protective film. The screen protective film is sticky by this reason. Secondly, a pre-protective film is attached on the adhesive layer. Than, form a groove on the pre-protective film on the pre-determined position by a groove forming process. Finally, cut the structure into specific size to gain a screen protective paster. It will work if a groove is formed on the pre-protective film in the pre-determined position by a groove forming process after cutting to gain a screen protective paster. That depends on a manufacturer's need to be convenient to make it.

The above mentioned groove forming process can be Laser Cutting Process, Rotary Cutting Process, or Knife Cutting Process. The depth of the groove has to be not larger than the thickness of the pre-protective film to prevent the adhesive layer from damage. It will influence the sticky capability of the adhesive layer and the light transparency of the screen protective film. The depth of the groove even can be larger than 0.75 times of the thickness of the pre-protective film. It will let the pre-protective films easier to be torn off sequentially according to the groove.

Besides, the protruding tag can be made when the pre-protective film is formed or after the pre-protective film has been formed. It will be convenient for a user to hold and tear the pre-protective film off easier. If the groove divides the pre-protective film into a first pre-protective film and a second pre-protective film, a first protruding tag will be formed to connect to the first pre-protective film and a second protruding tag will be formed to connect to the second pre-protective film. Due to the similar function and manufacturing method, the detail description has been ignored.

While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. A screen protective paster comprising:
a screen protective film, having an adhesive layer disposed thereon; and
a pre-protective film, disposed on the adhesive layer, wherein the pre-protective film has a groove thereon;

2. The screen protective paster of Claim 1, wherein the size of the pre-protective film and the screen protective film are the same.

3. The screen protective paster of Claim 1, wherein the pre-protective film has a protruding tag.

4. The screen protective paster of Claim 1, wherein the groove divides the pre-protective film into a first pre-protective film and a second pre-protective film.

5. The screen protective paster of Claim 4, wherein the first pre-protective film has a first protruding tag.

6. The screen protective paster of Claim 4, wherein the second pre-protective film has a second protruding tag.

7. A manufacturing method of screen protective paster, the steps of the method comprising:
providing a screen protective film, and arranging an adhesive layer on the surface of the screen protective film;
attaching a pre-protective film on the adhesive layer;
forming a groove on the pre-protective film by a groove forming process; and
cutting to gain a screen protective paster.

8. A manufacturing method of screen protective paster, the steps of the method comprising:
providing a screen protective film, and arranging an adhesive layer on the surface of the screen protective film;
attaching a pre-protective film on the adhesive layer;
cutting to gain a screen protective paster; and
forming a groove on the pre-protective film of the screen protective paster by a groove forming process.

9. The manufacturing method of screen protective paster of claim 7 or 8, wherein the groove forming process is selected from Laser Cutting Process, Rotary Cutting Process, and Knife Cutting Process.

10. The manufacturing method of screen protective paster of claim 7 or 8, wherein the pre-protective film has a protruding tag.

11. The manufacturing method of screen protective paster of claim 7 or 8, wherein the depth of the groove is not larger than the thickness of the pre-protective film.

12. The manufacturing method of screen protective paster of claim 11, wherein the depth of the groove is larger than 0.75 times of the thickness of the pre-protective film.

13. The manufacturing method of screen protective paster of claim 7 or 8, wherein the groove divides the pre-protective film into a first pre-protective film and a second pre-protective film.

14. The manufacturing method of screen protective paster of claim 13, wherein the first pre-protective film has a first protruding tag.

15. The manufacturing method of screen protective paster of claim 13, wherein the second pre-protective film has a second protruding tag.
